(19) Europäisches Patentamt
European Patent Office
Office européen des brevets

(11) **EP 2 244 225 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(51) Int Cl.:
*G06T 5/00* *(2006.01)*  *G06T 3/40* *(2006.01)*

(21) Anmeldenummer: **09005787.8**

(22) Anmeldetag: **24.04.2009**

(54) **Verfahren zum optischen Scannen eines Objektes sowie Vorrichtung**

Method for optically scanning an object and device

Procédé de balayage optique d'un objet et dispositif

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**27.10.2010 Patentblatt 2010/43**

(73) Patentinhaber:
• **F.Hoffmann-La Roche AG**
**4070 Basel (CH)**
Benannte Vertragsstaaten:
**AT BE BG CH CY CZ DK EE ES FI FR GB GR HR HU IE IS IT LI LT LU LV MC MK MT NL NO PL PT RO SE SI SK TR**
• **Roche Diagnostics GmbH**
**68305 Mannheim (DE)**
Benannte Vertragsstaaten:
**DE**

(72) Erfinder:
• **Händler, Erich**
**68623 Lampertheim (DE)**
• **Oranth, Norbert**
**68493 Hirschberg (DE)**

(74) Vertreter: **Bittner, Thomas L.**
**Forrester & Boehmert**
**Pettenkoferstrasse 20-22**
**80336 München (DE)**

(56) Entgegenhaltungen:
**EP-A- 1 830 218  WO-A-01/84209**
**WO-A-2006/023675  US-A1- 2004 051 030**

**Beschreibung**

Die Erfindung bezieht sich auf ein Verfahren zum optischen Scannen eines Objektes, insbesondere eines Testelementes für eine Körperflüssigkeit, sowie eine Vorrichtung zum Durchführen des Verfahrens und ein Computerprogramm-Produkt.

Hintergrund der Erfindung

Derartige Verfahren werden genutzt, um ein Objekt, welches auf einer Objektaufnahme angeordnet ist, mittels einer optischen Analyse zu untersuchen. Das optische Scannen umfasst hierbei regelmäßig mehrere Scannschritte, in denen das Objekt und eine zur optischen Analyse verwendete Detektionseinrichtung relativ zueinander in mehrere Scannstellungen verlagert werden, um auf diese Art und Weise eine Serie von optischen Scannbildern zu erfassen, die ausgewertet werden können. Beispielsweise wird ein solches optisches Scannverfahren genutzt, um Test- oder Probenelemente für eine Körperflüssigkeit optisch zu analysieren. Beim Bestimmen eines Test- oder Probenelementes für eine Körperflüssigkeit geht es um ein analytisches Nachweisverfahren, bei dem die Bestimmung einer oder mehrerer Körperflüssigkeiten mittels der optischen Detektion fluoreszierender und / oder absorbierender Label oder Moleküle geschieht, die zu diesem Zweck in dem Test- oder Probenelement an analytisch spezifischen Strukturen auf einem Substrat gebunden, erzeugt oder vernichtet werden. Der Nachweis der Körperflüssigkeit, zum Beispiel Blut, erfolgt im Bereich einer oder mehrerer Nachweiszonen auf dem Testelement. Die Nachweiszonen haben beispielsweise eine streifenförmige oder kreisförmige Ausdehnung auf dem Proben- oder Testelement.

Beim optischen Bestimmen eines solchen Testelementes mittels Scannen wird üblicherweise Test- oder Anregungslicht auf das Testelement gegeben. Mit Hilfe einer optischen Abbildungseinrichtung wird hierauf der Bereich der Nachweiszone, welcher sich in die Objektebene befindet, in die Bildebene auf eine photosensitive Detektionsfläche abgebildet. Eine solche Detektionsfläche wird beispielsweise mittels Fotodioden oder Fotomulitpliern zur Verfügung gestellt. Auch sind zweidimensionale Zeilensensoren und dreidimensionale Bildsensoren bekannt, mit denen eine Intensitätsverteilung von empfangenem Messlicht optisch erfasst werden kann.

Bei dem üblichen optischen Scannen werden entlang der Verlagerungsrichtung bei der Relativbewegung zwischen Objekt und Detektionseinrichtung mehrere aufeinander folgende Objekt- oder Scannbilder erzeugt, die anschließend zu einem Gesamtbild zusammengesetzt werden können. Dieses erfolgt, indem benachbarte Scannbilder Kante auf Kante aneinander gereiht werden, wodurch ein optisches Gesamtbild des untersuchten Objektes entsteht. Eine derartige Vorgehensweise des Zusammensetzens der einzelnen Scannbilder erfordert einen hohen Aufwand bei der Justage der optischen Mess- oder Analyseeinrichtung. Diese Probleme potenzieren sich noch, wenn mehrere Objekte nacheinander im Bereich der Objektaufnahme angeordnet und gescannt werden, was jeweils eine individuelle Justage der Mess- oder Analyseeinrichtung erfordert. Eine ungenügende Justage hat dann insbesondere nachteilige Auswirkungen auf die Tiefenschärfe der optischen Abbildung beim Scannen. Es besteht deshalb Bedarf für verbesserte Scanntechniken.

In Ausführungen des vorangehend beschriebenen Verfahrens wurde vorgeschlagen, mehrere Scannbilder aufzunehmen, die sich seitlich teilweise überlappen, und die Überlappungsbereiche beim Nebeneinanderlegen der aufgenommenen Scannbilder zu nutzen, um in verbesserter Art und Weise das Ende eines vorangehenden Scannbildes mit dem Anfang des hierauf folgenden Scannbildes zusammenzubringen. Ein derartiges Verfahren ist in den Dokumenten WO 01/84209 A2 sowie US 2004/0051030 A1 erwähnt.

Zusammenfassung der Erfindung

Aufgabe der Erfindung ist es, ein verbessertes Verfahren zum optischen Scannen eines Objektes, insbesondere eines Testelementes für eine Körperflüssigkeit, sowie eine Vorrichtung zum Durchführen des Verfahrens anzugeben, bei denen Messunsicherheiten besser begegnet werden kann. Insbesondere soll der Justageaufwand für den Benutzer verringert werden.

Diese Aufgabe wird erfindungsgemäß durch ein Verfahren zum optischen Scannen eines Objektes, insbesondere eines Testelementes für eine Körperflüssigkeit, nach dem unabhängigen Anspruch 1 sowie eine Vorrichtung zum Durchführen des Verfahrens nach dem unabhängigen Anspruch 11 gelöst. Gegenstand der Erfindung ist weiterhin ein Computer-Programmprodukt nach dem unabhängigen Anspruch 12. Vorteilhafte Ausgestaltungen der Erfindung sind in abhängigen Unteransprüchen angegeben.

Die Erfindung umfasst nach einem Aspekt ein Verfahren zum optischen Scannen eines Objektes, insbesondere eines Testelementes für eine Körperflüssigkeit, wobei das Verfahren die folgenden Schritte umfasst:

- optisches Scannen eines Abtastbereiches des Objektes mittels einer Detektionseinrichtung, indem die Detektionseinrichtung und das Objekt relativ zueinander in aufeinander folgende Scannstellungen verlagert werden, die in einer Objektebene entlang einer Scannrichtung um eine Scannschrittweite beabstandet sind,

- Erzeugen mehrerer Scannbilder, indem in den Scannstellungen ein Teilabtastbereich aus der Objektebene mittels einer optischen Abbildungseinrichtung auf eine Detektionsfläche in einer Bildebene abgebildet wird, wobei der Teilabtastbereich in Scannrichtung in der Objektebene eine Ausdehnung aufweist, die größer als die Scannschrittweite ist,
- Zerlegen der mehreren Scannbilder mittels einer Bildverarbeitung jeweils in Scannteilbilder, Erzeugen von zusammengesetzten Ergebnisbildern, indem jeweils mehrere Scannteilbilder zusammengesetzt werden, und
- Auswählen mindestens eines Objektmessbildes aus den zusammengesetzten Ergebnisbildern einem oder mehreren vorbestimmten Auswahlkriterien entsprechend.

Nach einem weiteren Aspekt der Erfindung ist eine Vorrichtung zum optischen Scannen eines Objektes, insbesondere eines Testelementes für eine Körperflüssigkeit, mit einer Objektaufnahme, einer optischen Detektionseinrichtung, einer Verlagerungseinrichtung, die konfiguriert ist, die Objektaufnahme und die Detektionseinrichtung beim optischen Scannens eines auf der Objektaufnahme angeordneten Objektes relativ zueinander in aufeinander folgende Scannstellungen zu verlagern, und einer Steuereinrichtung geschaffen, die konfiguriert ist, das optische Scannen gemäß dem vorangehenden Verfahren zu steuern.

Bei dem Verfahren zum optischen Scannen des Objektes werden in den verschiedenen Scannstellungen Teilabtastbereiche optisch erfasst, wobei die abgebildeten Teilabtastbereiche sich in der Objektebene, in welcher das zu scannende Objekt angeordnet ist, seitlich überlappen, da die Scannschrittweite kleiner als die Ausdehnung der Teilabtastbereiche in Scannrichtung in der Objektebene ist. Die Scannrichtung ist hierbei bevorzugt im Wesentlichen parallel zur Probenebene ausgerichtet. Die Scannbilder können in digitalisierter Form zur Verfügung gestellt werden.

Entgegen dem üblichen Scannen, bei dem nacheinander Scannbilder erzeugt werden, die dann gemäß einem Verfahren "Kante-an-Kante" zusammengesetzt werden, umfassen die Scannbilder, die in benachbarten Scannstellungen aufgenommen wurden, bei dem vorgeschlagenen Verfahren doppelt oder mehrfach aufgenommene Abschnitte der Teilabtastbereiche. Dieses bedeutet, dass Abschnitte des Abtastbereiches zwei- oder mehrfach in Scannbildern erfasst werden. Mit Hilfe der anschließenden Bildzerlegung der Scannbilder und dem Zusammensetzen zu mehreren zusammengesetzten Ergebnisbildern wird diese Art der Überlappung wenigstens teilweise wieder "aufgehoben", um auf diese Art und Weise dann schließlich ein Objektmessbild auszuwählen, welches anschließend weiter ausgewertet werden kann, zum Beispiel zum Bestimmen einer Körperflüssigkeit. Diese Bestimmung ist als solche in Verbindung mit der optischen Analyse von Test- oder Probenelementen bekannt.

Es können in einer Ausgestaltung mehrere Ergebnisbilder als Objektmessbilder ausgewählt werden, wenn diese beispielsweise von ähnlich guter Qualität sind. Hieraus kann dann anschließend ein Objektmessbild selektiert werden oder abgeleitet werden, zum mit Hilfe einer Mittelwertbildung.

Das Abbilden von Teilabtastbereichen, die in der Objektebene in Scannrichtung eine größere Ausdehnung als die Scannschrittweite haben, unterstützt das Abbilden des interessierenden Objektes oder von Bereichen hiervon, zum Beispiel einer Nachweiszone auf einem Test- oder Probenelement, auch für den Fall, dass die Justage der Detektionseinrichtung hinsichtlich des Objektes nicht optimal ist, so dass es zum Beispiel zu einem seitlichen Versatz der optischen Abbildung in der Bildebene kommt. Für den Benutzer einer Vorrichtung zum optischen Scannen wird die Messprozedur so erleichtert, da nicht stets eine "optimale Justage" notwendig ist, zum Beispiel nach einem Wechsel einer Probe auf der Probenaufnahme. Letztlich führt dieses auch zu einer Zeitersparnis beim Bestimmen mehrerer Proben.

Eine bevorzugte Weiterbildung der Erfindung sieht vor, dass als Auswahlkriterium die jeweilige Gesamthelligkeit der zusammengesetzten Ergebnisbilder verwendet wird. Bevorzugt wird das zusammengesetzte Ergebnisbild mit der größten Gesamthelligkeit ausgewählt, für das ein optimiertes Signal-Rausch-Verhältnis erwartet werden kann, um dieses ausgewählte Messbild dann weiter zu analysieren, zum Beispiel mit Hilfe einer Bildauswertungs-Software.

Bei einer zweckmäßigen Ausgestaltung der Erfindung kann vorgesehen sein, dass die zusammengesetzten Ergebnisbilder wenigstens ein Scannteilbild aus jedem der Scannbilder enthaltend erzeugt werden. In einer Ausgestaltung ist vorgesehen, dass die zusammengesetzten Ergebnisbilder genau ein Scannteilbild aus jedem der Scannbilder enthalten.

Eine vorteilhafte Ausführungsform der Erfindung sieht vor, dass die mehreren Scannbilder beim Zerlegen jeweils in streifenförmige Scannteilbilder mit einer Streifenbreite zerlegt werden, welche einem ganzzahligen Vielfachen der aus der Objektebene in die Bildebene abgebildeten Scannschrittweite entspricht. Im einfachsten Fall entspricht die Streifenbreite der streifenförmigen Scannbilder also einer Breite, die sich ergibt, wenn die Länge der Scannschrittweite aus der Objektebene in die Bildebene mittels des optischen Abbildungssystems der Detektionseinrichtung abgebildet wird.

Bevorzugt sieht eine Fortbildung der Erfindung vor, dass die Scannschrittweite eingestellt wird, so dass die aus der Objektebene in die Bildebene abgebildete Scannschrittweite einem ganzzahligen Vielfachen einer Breite eines Detektionselementes in der Detektionsfläche in Scannrichtung entspricht. Die Breite eines Detektionselementes entspricht zum Beispiel der Pixelbreite von Pixelelementen, die die Detektionsfläche bilden. Im Fall streifenförmiger Scannteilbilder kann auch von einer so genannten Zeilenbreite gesprochen werden.

Bei einer vorteilhaften Ausgestaltung der Erfindung kann vorgesehen sein, dass die Scannbilder stets auf ein und denselben Detektionsflächenbereich der Detektionsfläche abgebildet werden. Bei dieser Ausgestaltung werden die Scannbilder in jeder Scannstellung auf die gleiche Gruppe von Detektionselementen der Detektionsfläche abgebildet. In dieser und anderen Ausführungsformen kann es sich um eine Zeilenanordnung von Detektionselementen handeln. Aber auch die Abbildung auf eine zweidimensional ausgebildete Anordnung von Detektionselementen kann vorgesehen sein.

Eine bevorzugte Weiterbildung der Erfindung sieht vor, dass das optische Scannen im Wesentlich der Scheimpflugschen Regel entsprechend ausgeführt wird. Die Scheimpflugsche Regel oder Scheimpflug-Bedingung besagt, dass bei einer optischen oder fotografischen Abbildung die Bild-, Objektiv- und Schärfeebene entweder parallel zueinander liegen oder aber sich in einer gemeinsamen Schnittgeraden schneiden.

Eine Weiterbildung der Erfindung kann vorsehen, dass beim optischen Scannen die Objektebene und die Bildebene im Wesentlich parallel zueinender angeordnet werden. Die Scannrichtung verläuft dann im Wesentlichen parallel zu beiden Ebenen.

Bei einer zweckmäßigen Ausgestaltung der Erfindung kann vorgesehen sein, dass beim Zerlegen der mehreren Scannbilder zumindest ein Teil der Scannteilbilder als sich in einem Scannbild überlappende Scannteilbilder erzeugt werden. Bei dieser Ausführungsform umfassen zwei benachbarte Scannteilbilder, die beim Zerlegen eines Scannbildes entstehen, wenigstens einen Scannbildbereich gemeinsam, welcher als ein gemeinsamer Bildbereich betrachtet werden kann. Solche gemeinsamen Bildbereichen können in einem oder mehreren der zerlegten Scannbilder vorgesehen sein.

Eine vorteilhafte Ausführungsform der Erfindung sieht vor, dass beim Zerlegen der mehreren Scannbilder zumindest ein Teil der Scannteilbilder als sich in einem Scannbild nicht überlappende Scannteilbilder erzeugt werden.

Eine Ausgestaltung des vorangehend beschriebenen Verfahrens wird nachfolgend anhand einer mathematischen Betrachtung näher erläutert. Ein "Block" sei definiert als B (B = Blockgröße) zusammenhängende Bildzeilen, wobei B mit der geometrischen Scannschrittweite verknüpft ist. Wenn zum Beispiel N Blöcke mit B=2 vorgesehen sind, hat das Scannbild, welches dem Bildausschnitt der Detektionsfläche in der Bildebene entspricht, der in jedem Scannschritt abgespeichert wird, folgende Struktur:

| | |
|---|---|
| Zeile 1 | Block 1 |
| Zeile 2 | |
| Zeile 3 | Block 2 |
| Zeile 4 | |
| ........... | ........... |
| Zeile 2(n-1)+1 | Block n |
| Zeile 2n | |
| ........... | ........... |
| Zeile 2(N-1)+1 | Block N |
| Zeile 2N | |

Das bekannte Verfahren zum Scannen ist stets charakterisiert durch N=1.

Für das Scannen wird nun angenommen, dass im festgelegten und abgespeicherten Bildausschnitt, in welchem das Scannbild erzeugt wird, die Anzahl von Zeilen von Detektionselementen in der Detektionsfläche durch B ohne Rest teilbar ist, d.h. die folgende Bedingung erfüllt ist:

$$Zeilenzahl\_im\_Bildausschnitt \bmod B = 0 \qquad Gl. \ 1$$

Es sei M die Anzahl der Blocks in einem Scannbild. Der n$^{te}$ Block im m$^{ten}$ Scannbild sei

$$\Omega_{n,m}, \quad n=1, \ 2, \ ..., \ N \quad m=1, \ 2, \ ..., \ M \qquad Gl. \ 2$$

Die Scannbilder $O_i$, $i=1, 2, ..., M$ werden wie folgt durch Aneinanderfügen von Blöcken erzeugt.

$$O_1 = \Omega_{1,1} \oplus \Omega_{1,2} \oplus .... \Omega_{1,n} \oplus .... \oplus \Omega_{1,N} \qquad \text{Gl. 3}$$

$$O_i = \Omega_{i,1} \oplus \Omega_{i,2} \oplus .... \Omega_{i,n} \oplus .... \oplus \Omega_{i,N} \qquad \text{Gl. 4}$$

$$O_M = \Omega_{M,1} \oplus \Omega_{M,2} \oplus .... \Omega_{M,n} \oplus .... \oplus \Omega_{M,N} \qquad \text{Gl. 5}$$

$\oplus$ sei der "Anfügeoperator", bei dem zwei Blöcke vereinigt werden, indem die erste Zeile des zweiten Blocks nach der letzten Zeile des ersten angefügt wird.

Mit dem eine Folge von Anfügeoperationen beschreibenden "Summenanfügeoperator"

$\bigcup\limits_{von}^{bis} = \Omega_{von} \oplus .... \oplus \Omega_{bis}$ lässt sich die Generierung der M Scannbilder allgemein beschreiben als:

$$O_i = \bigcup_{n=1}^{n=N} \Omega_{i,n} \qquad\qquad i=1, 2, ..., M \qquad\qquad \text{Gl. 6}$$

Aus praktischen Gründen kann es vorteilhaft sein, dass die einzelnen Scannbilder $S_j$ ($j=1, 2, ..., M$) aneinander gehängt in einem einzigen großen Bild $\Gamma_i$ ($i=1, 2, ..., M*N*B$) übertragen werden. In diesem Fall muss das große Bild wieder in die ursprünglichen Scannbilder aufgeteilt werden, bevor das Zerlegen der Scannbilder vorgenommen werden kann.

Mit dem "Ausschneide-Operator" $\bigcap\limits_{von\_Zeile}^{bis\_Zeile}$ werden die einzelnen Ergebnisbilder $S_j$ wie folgt restauriert:

$$S_j = \bigcap_{i=(j-1)\cdot B\cdot N+1}^{i=j\cdot B\cdot N} \Gamma_i \qquad\qquad j=1, 2, ..., M \qquad\qquad \text{Gl. 7}$$

<u>Beschreibung bevorzugter Ausführungsbeispiele der Erfindung</u>

Die Erfindung wird im Folgenden anhand von Ausführungsbeispielen unter Bezugnahme auf Fig. einer Zeichnung näher erläutert. Hierbei zeigen:

Fig. 1 eine schematische Darstellung einer Messeinrichtung zum optischen Scannen eines in einer Objektebene angeordneten Objektes, insbesondere eines Proben- oder Test- elementes,

Fig. 2 eine schematische Darstellung mit fünf Scannbildern, die mittels optischen Scannen erfasst wurden,

Fig. 3 eine schematische Darstellung mit sechs Scannteilbildern, die mittels Zerlegen der Scannbilder aus Figur 2 gebildet sind,

Fig. 4 eine schematische Darstellung mit drei Scannbildern, die mittels optischen Scannen erfasst wurden,

Fig. 5 eine schematische Darstellung von fünf Scannteilbildern, die mittels Zerlegen der Scannbilder aus Fig. 4 erzeugt wurden,

Fig. 6        aneinandergereihte Scannbilder,

Fig. 7        mehrere zusammengesetzte Ergebnisbilder, die mittels Zerlegen und Zusammenset- zen aus den Scannbildern in Fig. 6 gewonnen wurden,

Fig. 8        eine grafische Darstellung für die jeweilige Gesamthelligkeit der zusammengesetz- ten Ergebnisbilder aus Fig. 7,

Fig. 9        aneinandergereihte Scannbilder,

Fig. 10       mehrere zusammengesetzte Ergebnisbilder, die mittels Zerlegen und Zusammenset- zen aus den Scannbildern in Fig. 9 gewonnen wurden, und

Fig. 11       eine grafische Darstellung für die jeweilige Gesamthelligkeit der zusammengesetz- ten Ergebnisbilder aus Fig. 10.

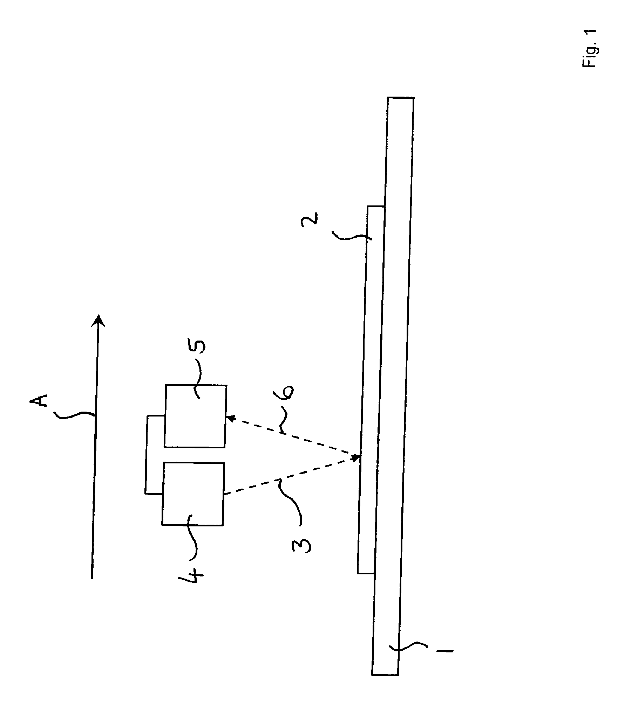

Fig. 1 zeigt eine schematische Darstellung eines Messsystems zum optischen Scannen eines Objektes, insbesondere eines Test- oder Probenelementes für eine Körperflüssigkeit. Auf einer Objektaufnahme 1 ist ein mittels optischen Scannen zu analysierendes Objekt 2 angeordnet. Bei der dargestellten Ausführungsform werden Test- oder Anregungslichtstrahlen 3 von einer Messlichtquelle 4, die zusammen mit einem Detektor 5 von einer Detektionseinrichtung umfasst ist, auf das Objekt 2 eingestrahlt. Mit Hilfe des Detektors 5, der ein optisches Abbildungssystem sowie eine Detektionsfläche aufweist, wird Messlicht in Form vom Fluoreszenz-, Reflexions- und / oder Absorptionslicht von der Probe 2 erfasst, so dass optische Abbildungen erzeugt werden, nämlich Scannbilder, die insbesondere auch als digitale Bilddaten erfasst werden können. Mit Hilfe einer Bildauswerte- oder Bildbearbeitungs-Software können die erfassten Bilddaten anschließend ausgewertet werden, zum Beispiel zum Bestimmen einer Körperflüssigkeit.

Beim optischen Scannen werden die Probenaufnahme 1 mit der hierauf angeordneten Probe 2 und die Detektionseinrichtung relativ zueinander entlang einer Scannrichtung verlagert, die in Fig. 1 mittels eines Pfeils A dargestellt ist. In den verschiedenen Relativstellungen, die als Scannstellungen bezeichnet werden können, wird ein jeweiliges Scannbild auf dem Detektor 5 erzeugt.

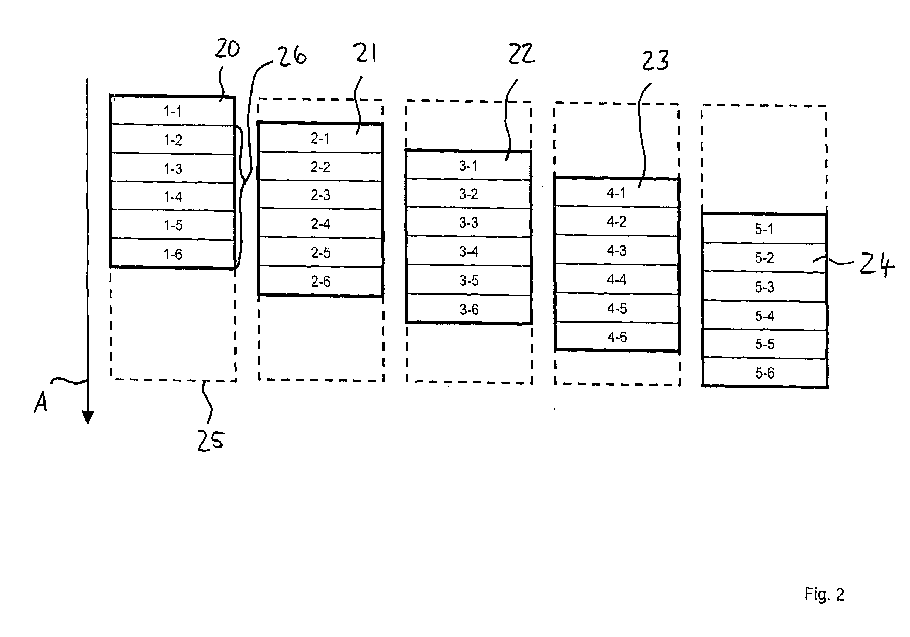

Fig. 2 zeigt eine schematische Darstellung von fünf mittels optischen Scannen einer Probe in der Bildebene erzeugten Scannbildern 20, ..., 24, die beim optischen Scannen nacheinander erzeugt wurden. Der Pfeil A zeigt in Fig. 2 schematische die Scannrichtung an. Die Verlagerung zwischen benachbarten Scannstellungen erfolgte um eine Scannschrittweite, die bei dieser Ausführungsform in der Bildebene der Breite der Teilstreifen der gezeigten Scannbilder entspricht. Die Scannschrittweite in der in Fig. 2 dargestellten Bildebene entspricht bei dieser Ausführungsform der Breite einer Pixelzeile auf der Detektionsfläche der Detektoreinrichtung. Schematisch dargestellt ist in Fig. 2 weiterhin der gesamte Abtastbereich 25, welcher bei diesem Ausführungsbeispiel in der Objektebene gescannt wird.

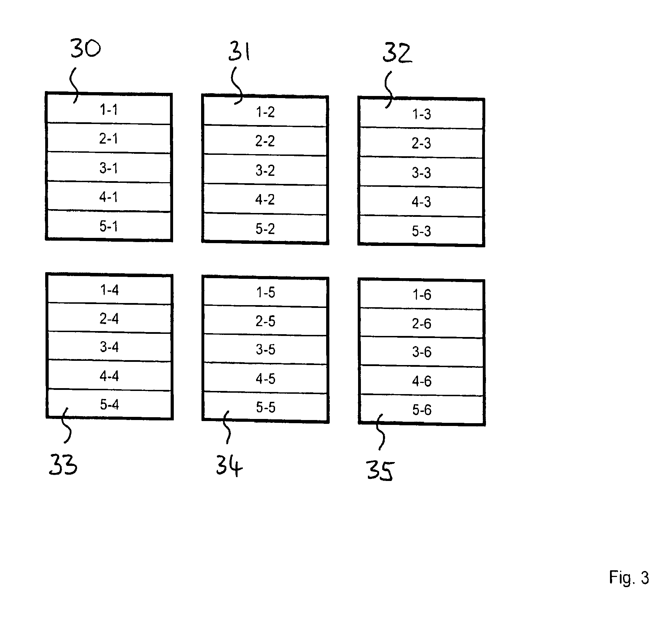

Die Bezugszeichen 1-1, 1-2, ... bezeichnen in Fig. 2 jeweilige streifenförmige Abschnitte der Scannbilder 20, ..., 24, die einem zugeordneten Streifen auf der genutzten Detektionsfläche in der Bildebene entsprechen, also zum Beispiel der Zeilenbreite einer Zeilenanordnung von Pixeln. In dem dargestellten Ausführungsbeispiel wird diese Streifenbreite dann auch genutzt bei der Zerlegung der Scannbilder 20, ..., 24, wie dies unten unter Bezugnahme auf Fig. 3 näher beschrieben wird.

In fünf Scannstellungen wurden dann die in Fig. 2 dargestellten Scannbilder 20, ..., 24 aufgenommen, die jeweils einer Abbildung eines Teilabtastbereiches des gesamten Abtastbereiches 25 entsprechen und in Fig. 2 nebeneinander und in Scannrichtung A um die Scannschrittweite versetzt dargestellt sind. Aus Fig. 2 ergibt sich, dass zumindest benachbarte Scannbilder jeweils einen Überlappungsbereich 26 aufweisen. Hierbei handelt es sich um einen Teilbereich des insgesamt abgetasteten Abtastbereiches 25 der Probe, der in beiden benachbarten Scannbildern dargestellt ist.

Nach der Aufnahme der Scannbilder gemäß Fig. 2 werden diese in streifenförmige Scannteilbilder zerlegt und zu verschiedenen, zusammengesetzten Ergebnisbildern 30, ..., 35 zusammengesetzt, wie dieses Fig. 3 zeigt. Hierbei enthält jedes zusammengesetzte Ergebnisbild 30, ..., 35 in Fig. 3 genau ein streifenförmiges Scannteilbild aus den fünf Scannbildern 20,..., 24 in Fig. 2. So enthält das zusammengesetzte Ergebnisbild 30 den jeweils ersten Streifenabschnitt aus den Scannbildern 20, ..., 24, nämliche die Streifenabschnitte 1-1, 2-1, 3-1, 4-1 und 5-1. Die zusammengesetzten Ergebnisbilder 30, ..., 35 in Fig. 3 können dann hinsichtlich eines oder mehrerer Auswahlkriterien analysiert werden, insbesondere mit Hilfe einer Bildauswertungssoftware, um dem oder den Auswahlkriterien entsprechend ein oder mehrere Objektmessbilder auszuwählen. Insbesondere kann es vorgesehen sein, aus den sechs zusammengesetzten Ergebnisbildern 30, ..., 35 in Fig. 3 das zusammengesetzte Ergebnisbild herauszufiltem, welches die größte Gesamthelligkeit aufweist.

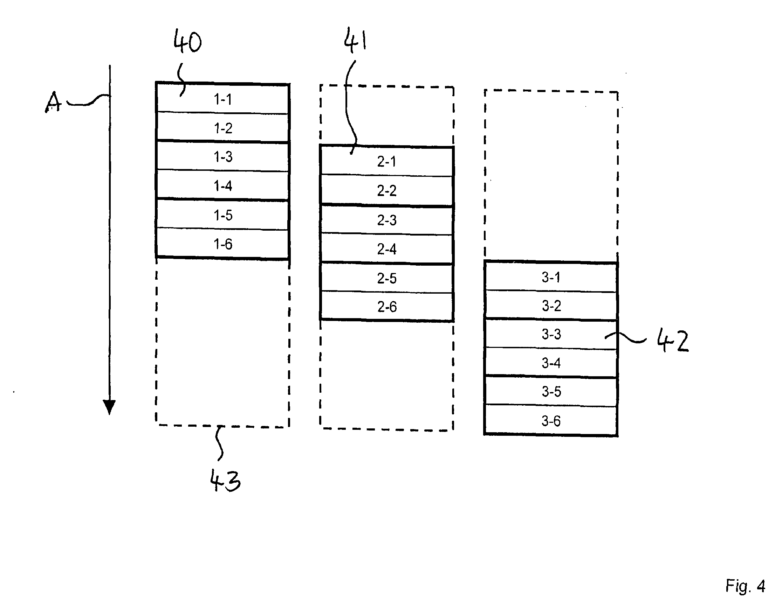

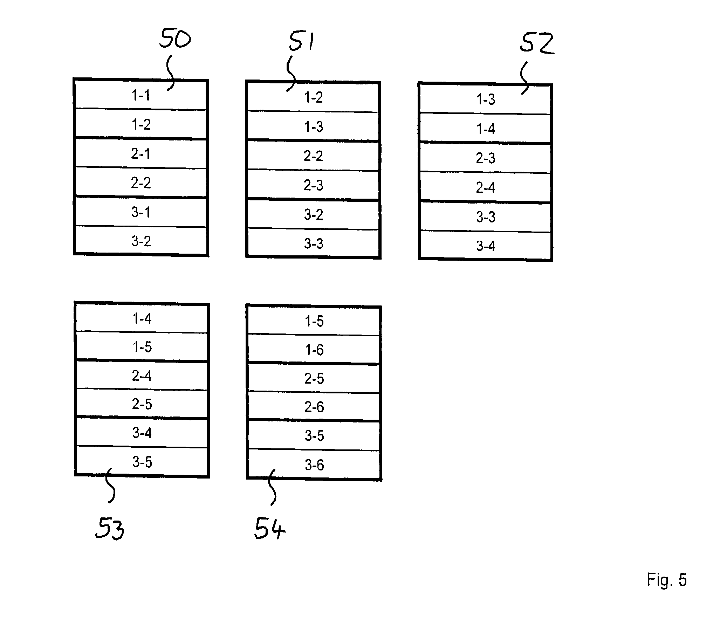

Die Fig. 4 und 5 verdeutlichen das zuvor beschriebene Verfahren zum optischen Scannen für ein weiteres Ausführungsbeispiel. Gemäß Fig. 4 wurden bei diesem Ausführungsbeispiel drei Scannbilder 40, 41, 42 in aufeinander folgenden Scannstellungen erfasst. Die Scannschrittweite in der in Fig. 4 dargestellten Bildebene entspricht bei diesem Ausführungsbeispiel der Breite von zwei Pixelzeilen auf der Detektionsfläche der Detektoreinrichtung. Schematisch gezeigt ist in Fig. 4 auch der gesamte Abtastbereich 43.

Fig. 5 zeigt dann die Zusammensetzung der aus den Scannbildern 40, 41, 42 in Fig. 4 gewonnenen streifenförmigen Scannteilbilder zu mehreren zusammengesetzten Ergebnisbildern 50, ..., 54, aus denen dann wiederum nach einem oder mehreren Auswahlkriterien ein Objektmessbild ausgewählt werden kann.

Das vorangehend beschriebene Verfahren wurde dann in den nachfolgenden Ausführungsbeispielen genutzt.

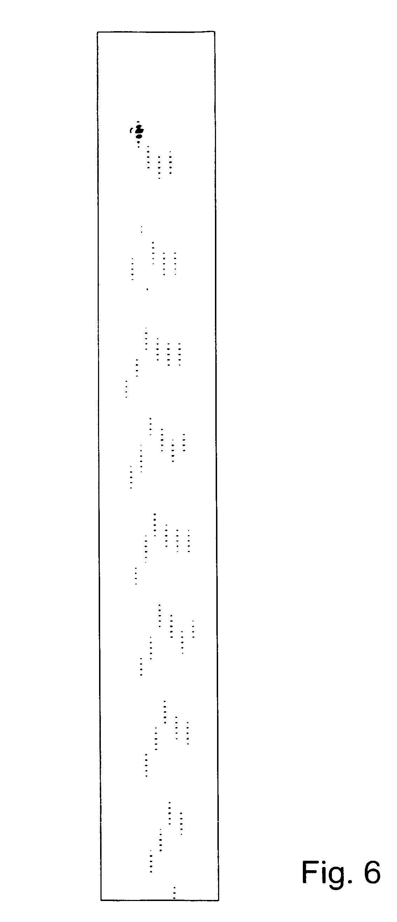

Fig. 6 zeigt aneinandergereihte Scannbilder. Es wurden 163 mittels Scannen aufgenommene Scannbilder dem üblichen "Kante-an-Kante" Verfahren entsprechend aneinander gereiht, wobei die Scannbilder im Bereich der Detektionsfläche jeweils 12 Zeilen von Detektionselementen einnehmen. Es ergibt sich, dass diese, der bekannten Aneinanderreihung von Scannbildern entsprechende Verarbeitung der gemessenen Scannbilder nicht zielführend auswertbar ist.

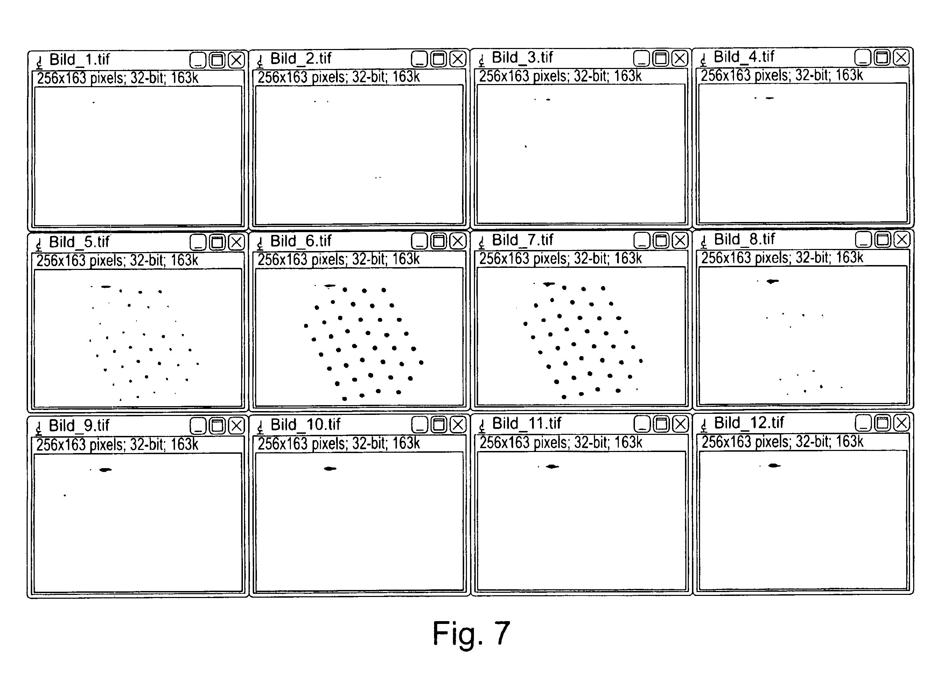

Fig. 7 zeigt nun zwölf Ergebnisbilder, die dem oben beschrieben Verfahren entsprechend aus den Scannbildern gewonnen wurden, indem streifenförmige Scannteilbilder erzeugt und zu zusammengesetzten Ergebnisbildern vereinigt wurden, nämlich den zwölf gezeigten Bildern.

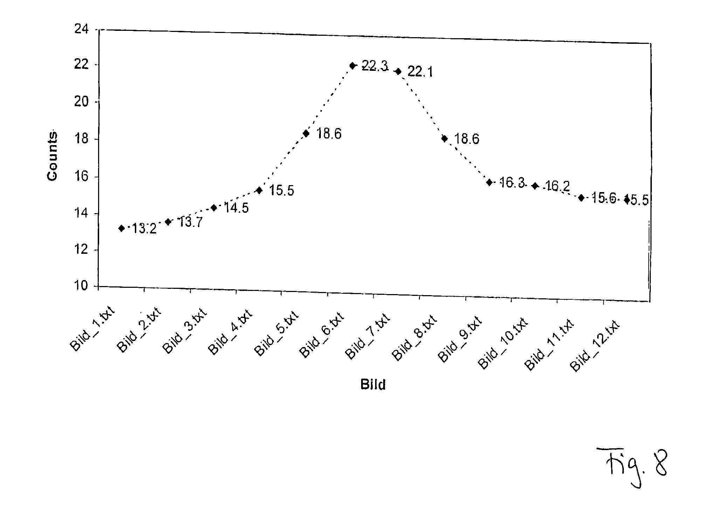

Fig. 8 zeigt eine grafische Darstellung für die jeweilige Gesamthelligkeit der zusammengesetzten Ergebnisbilder aus Fig. 8. Es ergibt sich, dass zwei der zusammengesetzten Ergebnisbilder mit einem relativen Wert von 22.3 und 22.1 den höchsten Bildhelligkeitswert aufweisen.

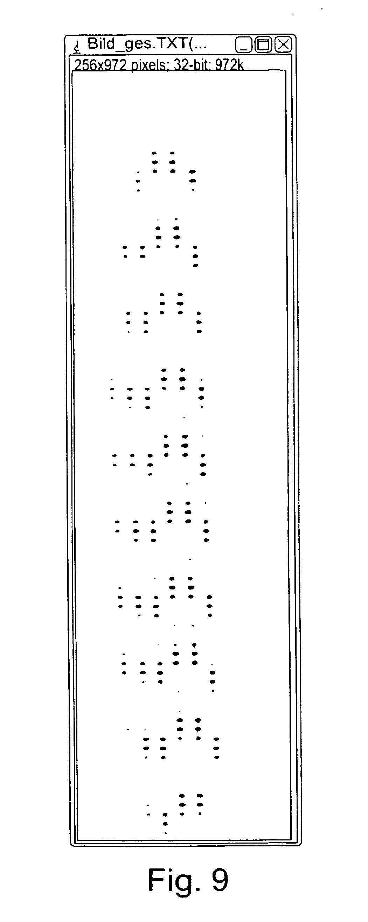

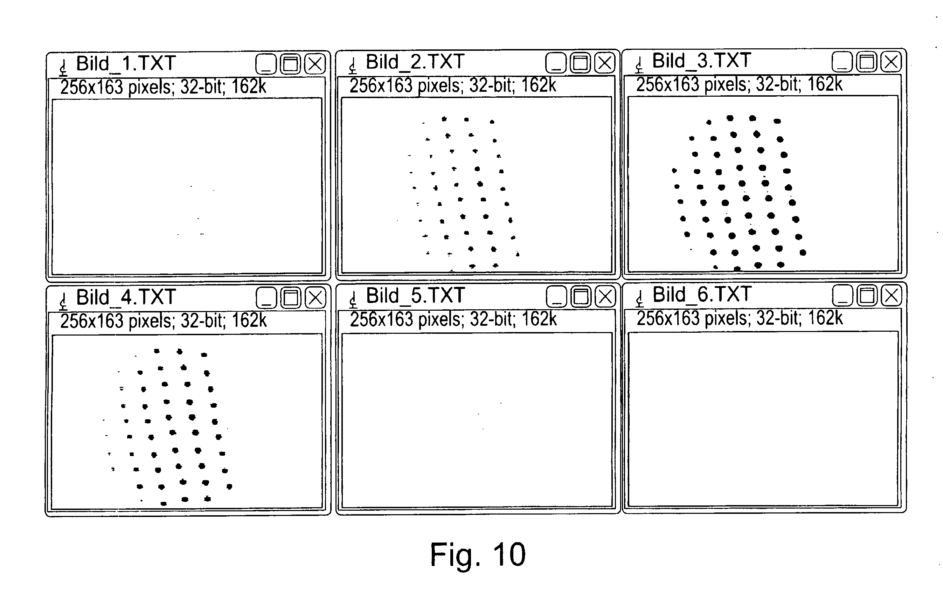

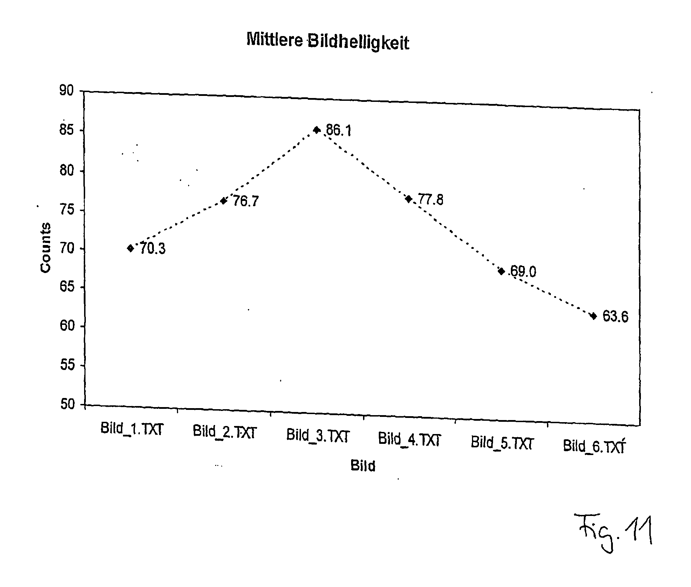

Fig. 9 zeigt vergleichbar der Darstellung in Fig. 6 aneinander gereihte Scannbilder. Es wurde 81 Scannbilder aneinander gereiht, wobei die Scannbilder im Bereich der Detektionsfläche wieder jeweils 12 Zeilen von Detektionselementen einnehmen. Die Fig. 10 und 11 zeigen dann vergleichbar den Fig. 7 und 8 zusammengesetzte Ergebnisbilder sowie diesen zugeordnete Gesamthelligkeiten.

## Patentansprüche

1. Verfahren zum optischen Scannen eines Objektes, insbesondere eines Testelementes für eine Körperflüssigkeit, wobei das Verfahren die folgenden Schritte umfasst:

   - optisches Scannen eines Abtastbereiches des Objektes (2) mittels einer Detektionseinrichtung (4, 5), indem die Detektionseinrichtung (4, 5) und das Objekt (2) relativ zueinander in aufeinander folgende Scannstellungen verlagert werden, die in einer Objektebene entlang einer Scannrichtung um eine Scannschrittweite beabstandet sind, und
   - Erzeugen mehrerer Scannbilden (20-24; 40-42), indem in den Scannstellungen ein Teilabtastbereich aus der Objektebene mittels einer optischen Abbildungseinrichtung auf eine Detektionsfläche in einer Bildebene abgebildet wird, wobei der Teilabtastbereich in Scannrichtung in der Objektebene eine Ausdehnung aufweist, die größer als die Scannschrittweite ist,
   **gekennzeichnet durch** die folgenden Schritte:
   - Zerlegen der mehreren Scannbilder mittels einer Bildverarbeitung jeweils in Scannteilbilder (1-1, ÷ 1-6),
   - Erzeugen von zusammengesetzten Ergebnisbildern, indem jeweils mehrere Scannteilbilder zusammengesetzt werden, (1-1, 2-1, ..., 5-1; 1-1, 1-2, 2-1, 2-2, 3-1, 3-2) und
   - Auswählen mindestens eines Objektmessbildes (30, 50) aus den zusammengesetzten Ergebnisbildern einem oder mehreren vorbestimmten Auswahlkriterien entsprechend.

2. Verfahren nach Anspruch 1, **dadurch gekennzeichnet, dass** als Auswahlkriterium die jeweilige Gesamthelligkeit der zusammengesetzten Ergebnisbilder verwendet wird.

3. Verfahren nach Anspruch 1 oder 2, **dadurch gekennzeichnet, dass** die zusammengesetzten Ergebnisbilder wenigstens ein Scannteilbild aus jedem der Scannbilder enthaltend erzeugt werden.

4. Verfahren nach mindestens einem der vorangehenden Ansprüche, **dadurch gekenn - zeichnet**, dass die mehreren Scannbilder beim Zerlegen jeweils in streifenförmige Scannteilbilder mit einer Streifenbreite zerlegt werden, welche einem ganzzahligen Vielfachen der aus der Objektebene in die Bildebene abgebildeten Scannschrittweite entspricht.

5. Verfahren nach mindestens einem der vorangehenden Ansprüche, **dadurch gekennzeichnet, dass** die Scannschrittweite eingestellt wird, so dass die aus der Objektebene in die Bildebene abgebildete Scannschrittweite einem ganzzahligen Vielfachen einer Breite eines Detektionselementes in der Detektionsfläche in Scannrichtung entspricht.

6. Verfahren nach mindestens einem der vorangehenden Ansprüche, **dadurch gekenn - zeichnet,** dass die Scannbilder stets auf ein und denselben Detektionsflächenbereich der Detektionsfläche abgebildet werden.

7. Verfahren nach mindestens einem der vorangehenden Ansprüche, **dadurch gekenn - zeichnet,** dass das optische Scannen im Wesentlich der Scheimpflugschen Regel entsprechend ausgeführt wird.

8. Verfahren nach mindestens einem der vorangehenden Ansprüche, **dadurch gekennzeichnet, dass** beim optischen Scannen die Objektebene und die Bildebene im Wesentlich parallel zueinender angeordnet werden.

9. Verfahren nach mindestens einem der vorangehenden Ansprüche, **dadurch gekennzeichnet, dass** beim Zerlegen der mehreren Scannbilder zumindest ein Teil der Scannteilbilder als sich in einem Scannbild überlappende Scannteilbilder erzeugt werden.

10. Verfahren nach mindestens einem der vorangehenden Ansprüche, **dadurch gekenn - zeichnet,** dass beim Zerlegen der mehreren Scannbilder zumindest ein Teil der Scannteilbilder als sich in einem Scannbild nicht überlappende Scannteilbilder erzeugt werden.

11. Vorrichtung zum optischen Scannen eines Objektes, insbesondere eines Testelementes für eine Körperflüssigkeit, mit einer Objektaufnahme (1), einer optischen Detektionseinrichung (4, 5), einer Verlagerungseinrichtung, die konfiguriert ist, die Objektaufnahme (1) und die Detektionseinrichtung (4, 5) beim optischen Scannen eines auf der Objektaufnahme (1) angeordneten Objektes (2) relativ zueinander in aufeinander folgende Scannstellungen zu verlagern, und einer Steuereinrichtung, die konfiguriert ist, das optische Scannen gemäß einem Verfahren nach mindestens einem der vorangehenden Ansprüche zu steuern.

12. Computerprogramm-Produkt mit Programmcode, welcher wahlweise auf einem computerlesbaren Speichermedium gespeichert ist und geeignet ist, beim Ablauf auf einer Rechenvorrichtung ein Verfahren nach mindestens einem der Ansprüche 1 bis 10 auszuführen.

**Claims**

1. Method for the optical scanning of an object, particularly a testing element for a bodily fluid, wherein the method comprises the following steps:

- optical scanning of a scanning region of the object (2) by means of a detection device (4, 5) by displacing the detection device (4, 5) and the object (2) relatively to one another into successive scanning positions which are spaced apart by a scanning step size along a scanning direction in an object plane, and
- generation of a plurality of scanned images (20 - 24; 40 - 42) by imaging a partial scanning region from the object plane onto a detection surface in an image plane by means of an optical imaging device in the scanning positions, wherein the partial scanning region has an extent in the scanning direction in the object plane which is larger than the scanning step size,
**characterised by** the following steps:
- breaking down the plurality of scanned images into scanned part images (1-1, ... , 1-6) in each case by means of image processing,
- generation of combined result images by combining a plurality of scanned part images in each case (1-1, 2-1, ... , 5-1; 1-1, 1-2, 2-1, 2-2, 3-1, 3-2), and
- selection of at least one object measurement image (30, 50) from the combined result images in accordance with one or a plurality of predetermined selection criteria.

2. Method according to Claim 1, **characterised in that** the respective overall brightness of the combined result images is used as the selection criterion.

3. Method according to Claim 1 or 2, **characterised in that** the combined result images are generated containing at least one scanned part image from each of the scanned images.

4. Method according to at least one of the preceding Claims, **characterised in that** the plurality of scanned images is broken down into strip-shaped scanned part images with a strip width which corresponds to a whole number multiple of the scanning step size imaged from the object plane into the image plane in each case during the breaking down.

5. Method according to at least one of the preceding claims, **characterised in that** the scanning step size is set so that the scanning step size imaged from the object plane into the image plane corresponds to a whole number multiple of a width of a detection element in the detection surface in the scanning direction.

6. Method according to at least one of the preceding claims, **characterised in that** the scanned images are always imaged onto one and the same detection surface region of the detection surface.

7. Method according to at least one of the preceding claims, **characterised in that** the optical scanning is essentially carried out in accordance with the Scheimpflug principle.

8. Method according to at least one of the preceding claims, **characterised in that** the object plane and the image plane are arranged essentially parallel to one another during the optical scanning.

9. Method according to at least one of the preceding claims, **characterised in that** at least a portion of the scanned part images are generated as scanned part images which overlap in a scanned image during the breaking down of the plurality of scanned images.

10. Method according to at least one of the preceding claims, **characterised in that** at least a portion of the scanned part images are generated as scanned part images which do not overlap in a scanned image during the breaking down of the plurality of scanned images.

11. Device for optical scanning of an object, particularly a testing element for a bodily fluid, with an object receptacle (1), an optical detection device (4, 5), a displacement device which is configured to displace the object receptacle (1) and the detection device (4, 5) relatively to one another in successive scanning positions during the optical scanning of an object (2) arranged on the object receptacle (1), and a control device which is configured to control the optical scanning in accordance with a method according to at least one of the preceding claims.

12. Computer program product with program code which is optionally stored on a computer-readable storage medium and is suitable, during the course of a computing operation to execute a method according to at least one of the Claims 1 to 10.

**Revendications**

1. Procédé pour le balayage optique d'un objet, en particulier d'un élément de test pour un liquide corporel, le procédé comprenant les étapes suivantes:

   - balayage optique d'une zone d'exploration de l'objet (2) au moyen d'un dispositif de détection (4, 5) par le fait que le dispositif de détection (4, 5) et l'objet (2) peuvent être déplacés l'un par rapport à l'autre dans des positions de balayage successives, qui sont espacées d'un incrément de balayage dans un plan d'objet le long d'un sens de balayage, et
   - génération de plusieurs images de balayage (20-24 ; 40-42) par le fait que, dans les positions de balayage, une zone de balayage partielle provenant du plan d'objet est représentée au moyen d'un dispositif de représentation optique sur une surface de détection dans un plan d'image, la zone de balayage partielle présentant dans le sens de balayage dans le plan d'objet une extension qui est supérieure à l'incrément de balayage, **caractérisé par** les étapes suivantes :
   - décomposition des plusieurs images de balayage au moyen d'un traitement d'image respectivement en images partielles de balayage (1-1, ÷ 1-6),
   - génération d'images de résultat assemblées par le fait qu'à chaque fois plusieurs images partielles de balayage sont assemblées (1-1, 2-1, ..., 5-1 ; 1-1, 1-2, 2-1, 2-2, 3-1, 3-2), et
   - sélection d'au moins une image de mesure d'objet (30, 50) dans les images de résultat assemblées en fonction d'un ou de plusieurs critères de sélection prédéfinis.

2. Procédé selon la revendication 1, **caractérisé en ce que** la luminosité globale respective des images de résultat assemblées est utilisée comme critère de sélection.

3. Procédé selon la revendication 1 ou 2, **caractérisé en ce que** les images de résultat assemblées sont générées en contenant au moins une image partielle de balayage provenant de chacune des images de balayage.

4. Procédé selon au moins l'une quelconque des revendications précédentes, **caractérisé en ce que** les plusieurs images de balayage sont décomposées lors de leur décomposition à chaque fois en images partielles de balayage en forme de bande avec une largeur de bande qui correspond à un multiple entier de l'incrément de balayage représenté à partir du plan d'objet dans le plan d'image.

5. Procédé selon au moins l'une quelconque des revendications précédentes, **caractérisé en ce que** l'incrément de balayage est réglé de façon que l'incrément de balayage représenté à partir du plan d'objet dans le plan d'image corresponde à un multiple entier d'une largeur d'un élément de détection dans la surface de détection dans le sens de balayage.

6. Procédé selon au moins l'une quelconque des revendications précédentes, **caractérisé en ce que** les images de balayage sont représentées toujours sur une seule et même zone de la surface de détection.

7. Procédé selon au moins l'une quelconque des revendications précédentes, **caractérisé en ce que** le balayage optique est réalisé largement en fonction de la règle de Scheimpflug.

8. Procédé selon au moins l'une quelconque des revendications précédentes, **caractérisé en ce que**, lors du balayage optique, le plan d'objet et le plan d'image sont disposés sensiblement parallèlement entre eux.

9. Procédé selon au moins l'une quelconque des revendications précédentes, **caractérisé en ce que**, lors de la décomposition des plusieurs images de balayage, au moins une partie des images partielles de balayage sont générées sous forme d'images partielles de balayage qui se superposent dans une image de balayage.

10. Procédé selon au moins l'une quelconque des revendications précédentes, **caractérisé en ce que**, lors de la décomposition des plusieurs images de balayage, au moins une partie des images partielles de balayage est générée sous forme d'images partielles de balayage qui ne se superposent pas dans une image de balayage.

11. Dispositif pour le balayage optique d'un objet, en particulier d'un élément de test pour un liquide corporel, comprenant un logement d'objet (1), un dispositif de détection optique (4, 5), un dispositif de déplacement, qui est configuré pour déplacer le logement d'objet (1) et le dispositif de détection (4, 5) lors du balayage optique d'un objet (2) disposé sur le logement d'objet (1) les uns par rapport aux autres dans des positions de balayage consécutives, et un dispositif de commande, qui est configuré pour commander le balayage optique d'après un procédé selon au moins l'une quelconque des revendications précédentes.

12. Produit de programme informatique avec code de programme, qui est stocké au choix sur un support d'enregistrement pouvant être lu par un ordinateur et convient pour mettre en oeuvre un procédé selon au moins l'une quelconque des revendications 1 à 10 lors d'une exécution sur un dispositif de calcul.

Fig. 1

Fig. 2

EP 2 244 225 B1

30

| 1-1 |
|-----|
| 2-1 |
| 3-1 |
| 4-1 |
| 5-1 |

31

| 1-2 |
|-----|
| 2-2 |
| 3-2 |
| 4-2 |
| 5-2 |

32

| 1-3 |
|-----|
| 2-3 |
| 3-3 |
| 4-3 |
| 5-3 |

| 1-4 |
|-----|
| 2-4 |
| 3-4 |
| 4-4 |
| 5-4 |

33

| 1-5 |
|-----|
| 2-5 |
| 3-5 |
| 4-5 |
| 5-5 |

34

| 1-6 |
|-----|
| 2-6 |
| 3-6 |
| 4-6 |
| 5-6 |

35

Fig. 3

EP 2 244 225 B1

A

40

| 1-1 |
|-----|
| 1-2 |
| 1-3 |
| 1-4 |
| 1-5 |
| 1-6 |

41

| 2-1 |
|-----|
| 2-2 |
| 2-3 |
| 2-4 |
| 2-5 |
| 2-6 |

| 3-1 |
|-----|
| 3-2 |
| 3-3 |
| 3-4 |
| 3-5 |
| 3-6 |

42

43

Fig. 4

Fig. 5

Fig. 6

Fig. 7

Fig. 8

Fig. 9

Fig. 10

Mittlere Bildhelligkeit

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0184209 A2
- US 20040051030 A1